# EUROPEAN PATENT SPECIFICATION

(11) **EP 4 150 147 B1**
(45) Date of publication and mention of the grant of the patent: **30.10.2024**
(21) Application number: 21729909.8
(22) Date of filing: 07.05.2021
(51) Int. Cl.: D21C 1/02, D21B 1/12, D21C 5/02, D21H 11/14, B27N 3/04

(54) **METHOD AND SYSTEM FOR PRODUCING RECYCLED FIBERS FOR MDF OR HDF PRODUCTION**
VERFAHREN UND SYSTEM ZUR HERSTELLUNG VON REZYKLIERTEN FASERN FÜR DIE MDF- ODER HDF-PRODUKTION
MÉTHODE ET SYSTÈME POUR LA PRODUCTION DE FIBRES RECYCLÉES POUR LA PRODUCTION DE MDF OU D'HDF

(30) Priority: 13.05.2020 SE 2050556
(43) Date of publication of application: 22.03.2023
(73) Proprietor: Valmet Technologies Oy, 02150 Espoo (FI)
(72) Inventor: MOHR, Robert, 65439 Floersheim (DE)
(74) Representative: Berggren Oy
(86) International application number: PCT/FI2021/050338
(87) International publication number: WO 2021/229144

(56) References cited:
- US-A- 5 656 129
- DATABASE WPI Week 201663, Derwent World Patents Index; AN 2016-41913N, XP002803565

## Description

### TECHNICAL FIELD

The invention relates to a method for producing recycled fibers from MDF or HDF containing material.

### BACKGROUND

Large scale production of Medium Density Fiberboard (MDF) began in the 1980's. High Density Fiberboard (HDF) is a similar product, although with a density which is usually higher than MDF. MDF/HDF is used in various applications such as furniture and flooring. Today, many tonnes of used MDF/HDF containing objects are thrown away every year and thereafter burned since methods for recycling such objects are not known.

In publication US 5 656 129 A is disclosed a method of manufacturing a fiberboard method from straw comprising the steps of: cutting the straw to a length of about two inches to about four inches; softening the straw by contacting the straw with steam under elevated pressure for a period of time between 30 seconds and two minutes; and mechanically refining the softened straw to produce fibers capable of being used in the manufacture of cellulosic fiberboard products.

In publication CN 105 696 393 A is disclosed a wet strength wastepaper recycling chemical and mechanical pulping method including material preparation, steaming, first extrusion soaking, second extrusion soaking, latency and defibering and purifying, screening and concentrating.

### SUMMARY

An object of the invention is to provide a method for recycling MDF or HDF containing material in order to produce fibers suitable for production of new MDF/HDF.

These and other objects are achieved by the present invention by means of a method according to the independent claim.

According to a first aspect of the invention, there is provided a method for producing recycled fibers from MDF or HDF containing material, for instance for use in MDF or HDF production or for use as strengthening fibers in containerboard. The method comprises steaming the MDF or HDF containing material for a predetermined time to obtain steamed material, subjecting the steamed material to a pulping process to obtain a slurry, screening the slurry to remove oversize particles to obtain a screened slurry, dewatering the screened slurry to obtain dewatered fibers and fluffing the dewatered fibers to obtain said recycled fibers.

It is understood that the MDF or HDF containing material refers to objects which at least partly consist of MDF or HDF, such as pieces or chips of recycled furniture, recycled flooring or raw board reject, i.e. pieces of MDF or HDF board which is rejected in an MDF or HDF sheet forming line. It is furthermore understood that the term oversize particles include, but is not limited to, to non-fibrous material such as plastic, paper, metal or the like which are part of the raw material (MDF or HDF containing material). Also including wood pieces coming from other types of panelboards as well as water proof glued pieces of MDF and HDF.

The method according to the first aspect of the invention is normally carried out continuously together with an MDF or HDF sheet forming line, supplying recycled fibers thereto. It is however possible to carry out the method batch-wise and supply recycled fibers to an MDF or HDF sheet forming line at a later time.

The invention is based on the insight that recycled fibers suitable for MDF or HDF production can be surprisingly effectively released from MDF or HDF containing material, in particular recycled material, by steaming and pulping the material. The invention is furthermore based on the insight that such steaming and pulping leaves non-desirable particles such as plastic, paper or metal largely unaffected size-wise which allows these oversize particles to be removed by means of screening.

In embodiments, the MDF or HDF containing material is provided in the form of chips having an area of less than 10 000 mm², preferably less than 3600 mm². The chips typically have a thickness which is substantially less than their length, but may be from 1,5 mm up to 60 mm.

In embodiments, the method further comprises providing the MDF or HDF containing material by means of reducing the size of an MDF or HDF containing object, for instance into chips.

In embodiments, the predetermined time is 1-30 min, preferably 5-20 min. The steaming may be carried out using steam having a temperature in the range of 95-105 °C. The steaming is normally carried out at atmospheric pressure, i.e. with 100°C steam, but it is understood that the steam could be slightly cooled off before reaching the MDF or HDF containing material. The steaming may alternatively be performed at slightly above 100 °C (i.e. at slight overpressure). Considering that MDF or HDF containing material from recycled furniture or flooring often comprises plastic, it is not suitable to use an excessively high steam temperature (much above 100 °C). The steaming is preferably carried out at 90 % consistency or more.

In embodiments, the pulping process is performed at 60-95 °C. The pulping process may be performed at a consistency 2-8 %, preferably about 4 %.

In embodiments, the screening comprises using a coarse screen and/or a fine screen, wherein the coarse screen has larger perforations than the fine screen. Coarse screening and/or fine screening may comprise more than one screens and/or screening stages. The coarse screen/-s may have holes having a diameter of 2-5 mm. The fine screen/-s may have slots having a width of 0.2-0.9 mm or holes having a diameter of 1-4 mm.

Before screening stages there can be a high consistency cleaner to remove heavy particles.

In embodiments, the dewatering is carried out to a consistency of at least 30 %, preferably around 50 %.

In embodiments, the fluffing comprises using a fluffer having a gap of 2-8 mm, preferably 3-5 mm, such as 4 mm.

According to a second aspect of the invention there is provided a method for producing MDF or HDF boards comprising producing recycled fibers using the method according first aspect of the invention or embodiments thereof, coating the recycled fibers with at least one binding agent, drying the coated recycled fibers, and after said drying, forming MDF or HDF sheets using the dried fibers, or in other words feeding the fibers to an MDF or HDF forming line. It is understood that coating the fibers with at least one binding agent refers to applying a glue or adhesion or binding agent to the fibers to allow the fibers to adhere or bind to each other further downstream in the process.

In embodiments of the method according to the second aspect of the invention, the method further comprises providing new biomass fibers from biomass material, coating the new biomass fibers with a binding agent, drying the coated new biomass fibers and mixing the new biomass fibers with the recycled fibers before said coating, or after said coating, or after said drying, such that new biomass fibers and recycled fibers are both fed to said MDF or HDF sheet forming line. In other words, the MDF/HDF production is based on recycled and new fibers. The method normally comprises producing the new biomass fibers from biomass such as tree material, bagasse, straw or any other type of biomass suitable to be used as basis for MDF/HDF production. Such process steps are well known in the art and will not be described in further detail here. Alternatively, the new fibers may be provided from another location and/or from a previous batch. As described above, the new biomass fibers are mixed with the recycled fibers before said coating, or after said coating, or after said drying. In other words, it is foreseeable that the new and recycled fibers are coated together (mixing before/during the coating) or that the fibers are dried together (mixing after said coating or during drying) or pre-treated separately (mixing after drying). In other embodiments, the MDF/HDF production is based solely on recycled fibers.

In embodiments of the method according to the second aspect of the invention, the coating is carried out using a blowline, in which said at least one binding agent is injected/sprayed.

According to a third aspect there is provided a system for producing recycled fibers from recycled MDF or HDF material, for instance for use in MDF or HDF production or for use as strengthening fibers in containerboard. The system comprises a steaming apparatus provided with an inlet for said MDF or HDF containing material and at least one steam inlet connected to a source of steam to provide steam to said material, a pulping apparatus connected to an outlet of said steaming apparatus and being configured to subject the steamed material to a pulping process to provide a slurry, a screening system connected to an outlet of said pulping apparatus and being configured to remove oversize particles from said slurry, a dewatering apparatus connected to an outlet of said screening system and being configured to dewater the slurry, and a fluffer connected to an outlet of said dewatering apparatus and being configured to fluff the dewatered slurry to produce said recycled fibers.

In embodiments of the system according to the third aspect, the steaming apparatus is an atmospheric steamer using low pressure steam or steaming to the pulping apparatus is in low steaming pressure. The screening system may comprise a coarse screen and/or a fine screen/-s, wherein the coarse screen has larger perforations than the fine screens. Such a screening system is known in the art and will not be described in further detail here. The dewatering apparatus may be a twin-roll press, a screw press, a twin-wire press, or any other suitable apparatus known to the person skilled in the art. The fluffer may be of the atmospheric/open type and may furthermore be of the low or high consistency type.

According to a fourth aspect there is provided a system for producing MDF or HDF boards. The system comprises a system for producing recycled fibers according to the third aspect, coating means configured to coat the recycled fibers with at least one binding agent, drying means configured to dry the coated recycled fibers, an MDF or HDF sheet forming line connected to the drying means to receive dried coated recycled fibers.

The features of the embodiments described above are combinable in any practically realizable way to form embodiments having combinations of these features. Further, all features and advantages of embodiments described above with reference to the first, second, third or fourth aspects may be applied in corresponding embodiments of any of the other aspects.

### BRIEF DESCRIPTION OF THE DRAWINGS

Above discussed and other aspects of the present invention will now be described in more detail using the appended drawings, which show presently preferred embodiments of the invention, wherein:
figs. 1A-1B show flowcharts of embodiments of the method according to the first aspect of the invention,
fig. 2 shows a flowchart of an embodiment of the method according to the second aspect of the invention,
fig. 3 shows a schematic illustration of an embodiment of a system according to the third aspect, and
fig. 4 shows a schematic illustration of an embodiment of a system according to the fourth aspect.

### DETAILED DESCRIPTION

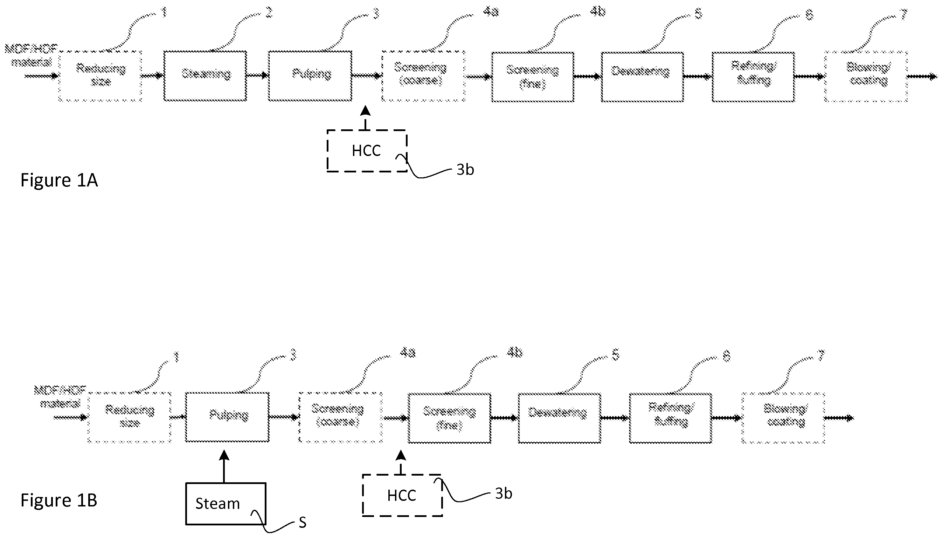

Fig. 1A shows a flowchart of an embodiment of the method according to the first aspect of the invention. The method comprises reducing 1 the size of one or more provided MDF or HDF containing object into chips having an area of less than 10 000 mm², preferably less than 3600 mm², for instance 40x40 mm, and having a thickness less than their length/width. The reducing step is optional, since the MDF/HDF containing object may alternatively have been reduced in size to chips beforehand, such that pre-produced chips are provided to the steaming 2. The chips are steamed 2 for a predetermined time, preferably 5-20 minutes, preferably at atmospheric conditions with 100 °C steam, to obtain steamed material. The steaming can be done as pre-steaming before the pulping process in the pulping apparatus. The steaming is preferably carried out at 90 % consistency or more. The steamed material is thereafter subjected to a pulping process 3, preferably at a temperature of 60-90 °C and at a consistency of about 4 %, to obtain a slurry. The slurry is thereafter screened using a fine screening system 4b, optionally with a preceding coarse screening 4a, to remove oversize and undesired particles. The screened slurry is thereafter dewatered 5 to a consistency of at least 30 %, preferably around 50 %. The dewatered material is refined/fluffed 6 to obtain recycled fibers. The recycled fibers may optionally be coated 7 with at least one binding agent as part of the method. Between the pulping process 3 and the screening system 4a, 4b optionally a high consistency cleaning (HCC) stage 3b in a high consistency cleaning (HCC) device 3b can be located.

Fig. 1B flowchart of an embodiment of the method according to the first aspect of the invention and corresponds to the embodiment of the method as above referring to figure 1A but the steaming 2 has been omitted and the steaming is done by introducing steam S from a steam source S directly to the pulping process 3 in the pulping apparatus at the pulping consistency, due to which difference this embodiment of Fig.1B does not fall within the scope of the claim 1. The method comprises reducing 1 the size of one or more provided MDF or HDF containing object into chips having an area of less than 10 000 mm², preferably less than 3600 mm², for instance 40x40 mm, and having a thickness less than their length/width. The reducing step is optional, since the MDF/HDF containing object may alternatively have been reduced in size to chips beforehand, such that pre-produced chips are provided. The steaming is done by introducing steam S from a steam source S directly to the pulping process 3 in the pulping apparatus at the pulping consistency. The material is subjected to a pulping process 3, preferably at a temperature of 60-90 °C and at a consistency of about 4 %, to obtain a slurry.

The slurry is thereafter screened using a fine screening system 4b, optionally with a preceding coarse screening 4a, to remove oversize and undesired particles. The screened slurry is thereafter dewatered 5 to a consistency of at least 30 %, preferably around 50 %. The dewatered material is fluffed 6 to obtain recycled fibers. The recycled fibers may optionally be coated 7 with at least one binding agent as part of the method. Between the pulping process 3 and the screening system 4a, 4b optionally a high consistency cleaning (HCC) stage 3b in a high consistency cleaning (HCC) device 3b can be located.

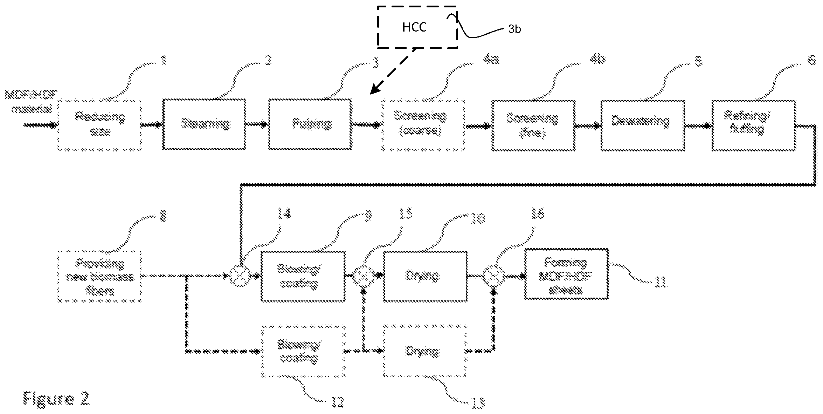

Fig. 2 shows a flowchart of an embodiment of the method according to the second aspect of the invention. The method comprises the same method steps 1-6 as shown in fig. 1 and explained above. The method further comprises a coating step 9, which is similar to the coating 7 in fig. 1 in that at least one binding agent such as resin and wax is added, except that new biomass fibers may be provided 8 and optionally be mixed 14 with the recycled fibers. The new biomass fibers may be produced from biomass such as tree material, bagasse, straw or any other type of biomass suitable to be used as basis for MDF/HDF production. The process steps involved in producing the new biomass fibers are well known to the person skilled in the art and will not be described in further detail herein. The coated fibers are thereafter dried 10, and after said drying, fed to an MDF or HDF sheet forming line 11. As indicated by the dotted arrows in the figure, the new biomass fibers may alternatively be subjected to a separate coating step 12 and be mixed 15 with the recycled fibers after coating 9 or may be subjected to separate coating and drying steps 12, 13, and be mixed 16 with the recycled fibers after the drying step 10. The process steps involved in an MDF or HDF sheet forming are well known to the person skilled in the art and will not be described in further detail here.

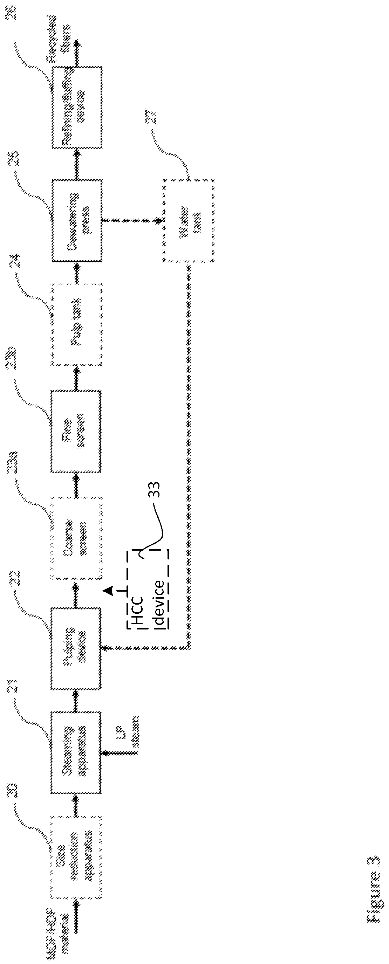

Fig. 3 shows a schematic illustration of an embodiment of a system according to the third aspect. The system comprises an optional size reduction apparatus 20, for instance a hammermill, and a steaming apparatus 21 being an atmospheric steamer provided with an inlet for said MDF or HDF containing material and at least one steam inlet connected to a source of low-pressure steam to provide steam to said material. A pulping apparatus 22 is connected to an outlet of the steaming apparatus 21 and is configured to subject the steamed material to a pulping process to provide a slurry. An optional coarse screening system 23a is connected to an outlet of the pulping apparatus 22 and is configured to remove oversize particles from the slurry. A fine screening system 23b is connected to an outlet of the coarse screening system 23a or (in embodiments without a coarse screen) to the pulping apparatus 22 and is configured to remove smaller particles from the slurry. The coarse screen has holes with a diameter of 2-5 mm. The fine screen has slots having a width of 0.2-0.9 mm or holes having a diameter of 1-4 mm. The outlet of the fine screening system is connected to an optional pulp tank 24 in which the slurry may be stored prior to being fed to a dewatering apparatus 25, which is a screw press or similar. The water pressed out from the dewatering apparatus may be fed to an optional water tank 27 from which it is recycled for use in the pulping apparatus. An atmospheric refiner 26 is connected to an outlet of the dewatering apparatus 25 and is configured to refine the dewatered slurry to produce said recycled fibers. The refiner has a fillings gap of 3-5 mm, preferably about 4 mm. Between the pulping apparatus 22 and the screening system 23a, 23b optionally a high consistency cleaning (HCC) stage 3pb in a high consistency cleaning (HCC) device 3b can be located.

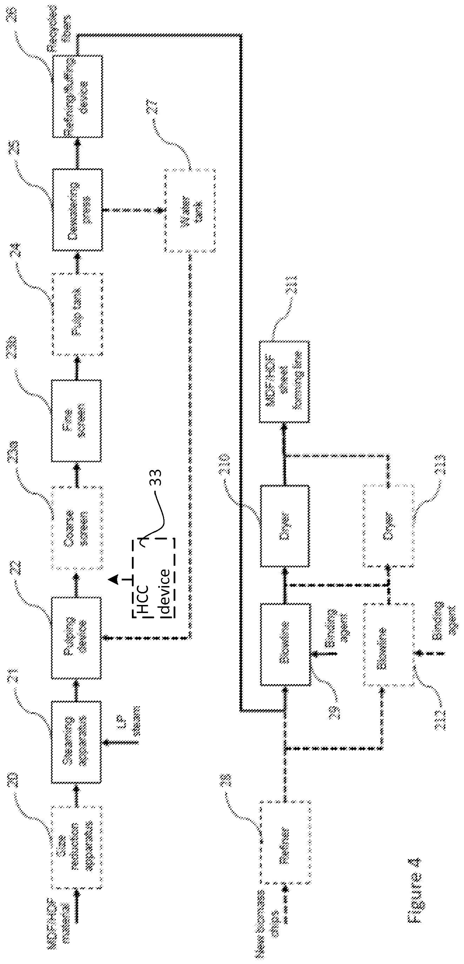

Fig. 4 shows a schematic illustration of an embodiment of a system according to the fourth aspect. The system comprises the same devices and screening systems 20-27 as shown in fig. 3 and described above. The outlet of the refiner 26 is connected to a blowline 29, in which at least one binding agent is injected/sprayed to coat the recycled fibers while being conveyed to a dryer 210, being of a conventional type as used in MDF/HDF production lines. The outlet of the dryer 210 is connected to an MDF or HDF sheet forming line 211. Optionally, new biomass fibers may be provided such that the MDF or HDF sheets are formed from a combination of new and recycled fibers. In fig. 4, new biomass fibers are illustrated as being provided in the form of new biomass chips which are fed to a refiner/defibrator 28 for size reduction/refining. In other embodiments, the system may furthermore comprise devices such as a debarker, chipper, screen and chip washer involved in the production of producing the biomass chips fed to the refiner 28. In yet other embodiments, the refiner 28 is omitted, and new biomass fibers are supplied directly, for instance from a tank containing previously produced fibers. As illustrated in the figure, the new fibers may be added together with the recycled fibers to inlet of the blowline 29 such that the new and recycled fibers are coated/blown and dried together. Alternatively, the new biomass fibers may be fed to a separate (optional) blowline 212 and be fed together with the recycled fibers to the dryer 210 or may be fed to a separate (optional) dryer 213 and be mixed with the recycled fibers after drying by being fed together to the MDF or HDF sheet forming line 211. The devices and screening systems comprised in an MDF or HDF sheet forming line 211 are well known to the person skilled in the art and will not be described in further detail here.

## Claims

1. Method for producing recycled fibers from MDF or HDF containing material, wherein said MDF or HDF containing material is provided in the form of chips having an area of less than 10 000 mm², preferably less than 36 00 mm², comprising
- providing said MDF or HDF containing material by means of reducing (1) the size of an MDF or HDF containing object into said chips,
- steaming (2) said MDF or HDF containing material for a predetermined time to obtain steamed material;
- subjecting the steamed material to a pulping process (3) to obtain a slurry;
- screening (4a, 4b) the slurry to remove oversize particles to obtain a screened slurry;
- dewatering (5) the screened slurry to obtain dewatered fibers, and
- fluffing (6) the dewatered fibers to obtain said recycled fibers.

2. Method according to claim 1, wherein said predetermined time is 1-30 min, preferably 5-20 min.

3. Method according to claim 1 or 2, wherein said steaming (2) is carried out using steam having a temperature in the range of 95-105 °C.

4. Method according to any of the preceding claims, wherein said steaming (2) is carried out at 90 % consistency or more.

5. Method according to any of the preceding claims, wherein said pulping process (3) is performed at 60-90 °C.

6. Method according to any of the preceding claims, wherein said pulping process (3) is performed at consistency 2-8 %, preferably about 4 %.

7. Method according to any of the preceding claims, wherein said screening (4a, 4b) comprises using a coarse screen and/or a fine screen/-s, wherein the coarse screen has larger perforations than the fine screen/-s.

8. Method according to claim 7, wherein said coarse screen has holes having a diameter of 2-5 mm.

9. Method according to claim 7 or 8, wherein said fine screen/-s has/have slots having a width of 0.2-0.9 mm or holes having a diameter of 1-4 mm.

10. Method according to any of the preceding claims, wherein said dewatering (5) is carried out to a consistency of at least 30 %, preferably around 50 %.

11. Method according to any of the preceding claims, wherein said fluffing (6) comprises using a fluffer having a gap of 2-8 mm, preferably 3-5 mm, such as 4 mm.

12. Method for producing MDF or HDF boards comprising:
- producing recycled fibers using the method according to any of the preceding claims;
- coating (9) the recycled fibers with at least one binding agent;
- drying (10) the coated recycled fibers, and
- forming (11) MDF or HDF sheets using the dried fibers.

13. Method according to claim 12, further comprising:
- providing (8) new biomass fibers from biomass material;
- coating (9, 12) the new biomass fibers with a binding agent;
- drying (10, 13) the coated new biomass fibers,
- mixing (14, 15, 16) the new biomass fibers with said recycled fibers before said coating, or after said coating, or after said drying, such that new biomass fibers and recycled fibers are both fed to said MDF or HDF sheet forming line.

14. Method according to claim 12 or 13, wherein said coating (9, 12) is carried out using a blowline, in which said at least one binding agent is injected.

## Patentansprüche

1. Verfahren zum Herstellen von wiederaufbereiteten Fasern aus MDF- oder HDF-haltigem Material, wobei das MDF- oder HDF-haltige Material in der Form von Schnitzeln bereitgestellt wird, die eine Fläche von weniger als 10 000 mm², vorzugsweise weniger als 3 600 mm², aufweisen, wobei das Verfahren Folgendes umfasst:
- Bereitstellen des MDF- oder HDF-haltigen Materials auf dem Wege des Verringerns (1) der Größe eines MDF- oder HDF-haltigen Objekts zu den Schnitzeln,
- Dämpfen (2) des MDF- oder HDF-haltigen Materials für eine vorbestimmte Zeit, um gedämpftes Material zu erhalten,
- Unterwerfen des gedämpften Materials einem Aufschließungsprozess (3), um eine Aufschlämmung zu erhalten,
- Sieben (4a, 4b) der Aufschlämmung, um übergroße Teilchen zu entfernen, um eine gesiebte Aufschlämmung zu erhalten,
- Entwässern (5) der gesiebten Aufschlämmung, um entwässerte Fasern zu erhalten, und
- Flocken (6) der entwässerten Fasern, um die wiederaufbereiteten Fasern zu erhalten.

2. Verfahren nach Anspruch 1, wobei die vorbestimmte Zeit 1 bis 30 min, vorzugsweise 5 bis 20 min, beträgt.

3. Verfahren nach Anspruch 1 oder 2, wobei das Dämpfen (2) unter Verwendung von Dampf ausgeführt wird, der eine Temperatur in dem Bereich von 95 bis 105 °C aufweist.

4. Verfahren nach einem der vorhergehenden Ansprüche, wobei das Dämpfen (2) bei einer Konsistenz von 90 % oder mehr ausgeführt wird.

5. Verfahren nach einem der vorhergehenden Ansprüche, wobei der Aufschließungsprozess (3) bei 60 bis 90 °C durchgeführt wird.

6. Verfahren nach einem der vorhergehenden Ansprüche, wobei der Aufschließungsprozess (3) bei einer Konsistenz von 2 bis 8 %, vorzugsweise etwa 4 %, durchgeführt wird.

7. Verfahren nach einem der vorhergehenden Ansprüche, wobei das Sieben (4a, 4b) das Verwenden eines groben Siebes und/oder von (einem) feinen Sieb(en) umfasst, wobei das grobe Sieb größere Perforationen aufweist als das/die feine(n) Sieb(e).

8. Verfahren nach Anspruch 7, wobei das grobe Sieb Löcher aufweist, die einen Durchmesser von 2 bis 5 mm aufweisen.

9. Verfahren nach Anspruch 7 oder 8, wobei das/die feine(n) Sieb(e) Schlitze, die eine Breite von 0,2 bis 0,9 mm aufweisen, oder Löcher, die einen Durchmesser von 1 bis 4 mm aufweisen, aufweist/aufweisen.

10. Verfahren nach einem der vorhergehenden Ansprüche, wobei das Entwässern (5) bis zu einer Konsistenz von mindestens 30 %, vorzugsweise rund 50 %, ausgeführt wird.

11. Verfahren nach einem der vorhergehenden Ansprüche, wobei das Flocken (6) das Verwenden einer Flockvorrichtung umfasst, die einen Spalt von 2 bis 8 mm, vorzugsweise 3 bis 5 mm, wie beispielsweise 4 mm, aufweist.

12. Verfahren zum Herstellen von MDF- oder HDF-Platten, das Folgendes umfasst:
- Herstellen wiederaufbereiteter Fasern unter Verwendung des Verfahrens nach einem der vorhergehenden Ansprüche,
- Beschichten (9) der wiederaufbereiteten Fasern mit mindestens einem Bindemittel,
- Trocknen (10) der beschichteten wiederaufbereiteten Fasern und
- Formen (11) von MDF- oder HDF-Bahnen unter Verwendung der getrockneten Fasern.

13. Verfahren nach Anspruch 12, das ferner Folgendes umfasst:
- Bereitstellen (8) frischer Biomassefasern aus Biomassematerial,
- Beschichten (9, 12) der frischen Biomassefasern mit einem Bindemittel,
- Trocknen (10, 13) der beschichteten frischen Biomassefasern,
- Mischen (14, 15, 16) der frischen Biomassefasern mit den wiederaufbereiteten Fasern vor dem Beschichten oder nach dem Beschichten oder nach dem Trocknen, so dass sowohl die frischen Biomassefasern als auch die wiederaufbereiteten Fasern der MDF- oder HDF-Bahnformanlage zugeführt werden.

14. Verfahren nach Anspruch 12 oder 13, wobei das Beschichten (9, 12) unter Verwendung einer Blasanlage ausgeführt wird, in der das mindestens eine Bindemittel eingespritzt wird.

## Revendications

1. Procédé de production de fibres recyclées à partir d'un matériau contenant du MDF ou du HDF, dans lequel ledit matériau contenant du MDF ou du HDF est fourni sous la forme de copeaux ayant une surface inférieure à 10 000 mm², de préférence inférieure à 3 600 mm², comprenant
- la prévision dudit matériau contenant du MDF ou du HDF en réduisant (1) la taille d'un objet contenant du MDF ou du HDF pour obtenir lesdits copeaux,
- l'étuvage (2) de ladite matière contenant du MDF ou du HDF pendant une durée prédéterminée pour obtenir de la matière étuvée ;
- la soumission de la matière étuvée à un procédé de réduction en pâte (3) pour obtenir une suspension épaisse ;
- le criblage (4a, 4b) de la suspension pour éliminer les particules surdimensionnées afin d'obtenir une suspension criblée ;
- la déshydratation (5) de la suspension criblée pour obtenir des fibres déshydratées, et
- le peluchage (6) des fibres déshydratées pour obtenir lesdites fibres recyclées.

2. Procédé selon la revendication 1, dans lequel ladite durée prédéterminée est de 1 à 30 min, de préférence de 5 à 20 min.

3. Procédé selon la revendication 1 ou 2, dans lequel ledit étuvage (2) est effectué en utilisant de la vapeur ayant une température dans la plage de 95 à 105°C.

4. Procédé selon l'une quelconque des revendications précédentes, dans lequel ledit étuvage (2) est effectué à une consistance de 90 % ou plus.

5. Procédé selon l'une quelconque des revendications précédentes, dans lequel ledit processus de réduction en pâte (3) est effectué à 60 à 90°C.

6. Procédé selon l'une quelconque des revendications précédentes, dans lequel ledit processus de réduction en pâte (3) est effectué à une consistance de 2 à 8 %, de préférence d'environ 4 %.

7. Procédé selon l'une quelconque des revendications précédentes, dans lequel ledit criblage (4a, 4b) comprend l'utilisation d'un crible grossier et/ou d'un ou de plusieurs cribles fins, le crible grossier ayant des perforations plus grandes que le ou les cribles fins.

8. Procédé selon la revendication 7, dans lequel ledit crible grossier a des trous ayant un diamètre de 2 à 5 mm.

9. Procédé selon la revendication 7 ou 8, dans lequel ledit ou lesdits cribles fins a/ont des fentes ayant une largeur de 0,2 à 0,9 mm ou des trous ayant un diamètre de 1 à 4 mm.

10. Procédé selon l'une quelconque des revendications précédentes, dans lequel ladite déshydratation (5) est effectuée à une consistance d'au moins 30 %, de préférence d'environ 50 %.

11. Procédé selon l'une quelconque des revendications précédentes, dans lequel ledit peluchage (6) comprend l'utilisation d'un pelucheur ayant un entrefer de 2 à 8 mm, de préférence de 3 à 5 mm, tel que 4 mm.

12. Procédé de fabrication de panneaux en MDF ou HDF comprenant :
- la production de fibres recyclées en utilisant le procédé selon l'une quelconque des revendications précédentes ;
- l'enduction (9) des fibres recyclées avec au moins un liant ;
- le séchage (10) des fibres recyclées enduites, et
- le formage (11) de feuilles de MDF ou HDF à l'aide des fibres séchées.

13. Procédé selon la revendication 12, comprenant en outre :
- la prévision (8) de fibres de biomasse neuves issues de matériau de biomasse ;
- l'enduction (9, 12) des fibres de biomasse neuves avec un liant ;
- le séchage (10, 13) des fibres de biomasse neuves enduites,
- le mélange (14, 15, 16) des fibres de biomasse neuves avec lesdites fibres recyclées avant ladite enduction, ou après ladite enduction, ou après ledit séchage, de sorte que les fibres de biomasse neuves et les fibres recyclées soient toutes deux apportées dans ladite ligne de formage de feuilles de MDF ou HDF.

14. Procédé selon la revendication 12 ou 13, dans lequel ladite enduction (9, 12) est réalisée en utilisant une ligne de soufflage dans laquelle ledit au moins un agent liant est injecté.
